# EUROPEAN PATENT APPLICATION

(11) **EP 4 099 486 A1**
(43) Date of publication of application: **07.12.2022**
(21) Application number: 21747163.0
(22) Date of filing: 18.01.2021
(51) Int. Cl.: H01M 50/20, H01M 4/131, H01M 4/525, H01M 4/66, H01M 10/052, H01M 10/058, H01M 50/409

(54) **NON-AQUEOUS ELECTROLYTE SECONDARY CELL AND SECONDARY CELL MODULE**

(30) Priority: 31.01.2020 JP 2020015237
(71) Applicant: Panasonic Holdings Corporation, Osaka 571-8501 (JP)
(72) Inventor: BABA Yasunori, Osaka-shi, Osaka 540-6207 (JP); TSUZUKI Kouhei, Osaka-shi, Osaka 540-6207 (JP); SHIMAMURA Harunari, Osaka-shi, Osaka 540-6207 (JP); OHARA Keisuke, Osaka-shi, Osaka 540-6207 (JP); YANAGIDA Katsunori, Osaka-shi, Osaka 540-6207 (JP)
(74) Representative: Novagraaf International SA
(86) International application number: PCT/JP2021/001388
(87) International publication number: WO 2021/153292

(57) **Abstract**

This secondary cell module comprises: at least one non-aqueous electrolyte secondary cell; and an elastic body that is arranged together with the non-aqueous electrolyte secondary cell and that receives a load from the non-aqueous electrolyte secondary cell in the direction of the arrangement. The non-aqueous electrolyte secondary cell is provided with: an electrode body in which a positive electrode, a negative electrode, and a separator disposed between the positive electrode and the negative electrode are layered; and a housing that accommodates the electrode body. The compression modulus of elasticity of the elastic body is in the range 5-120 MPa, and the positive electrode is provided with: a positive electrode current collector that contains titanium as a principal constituent and has a thickness of 1-8 µm; and a positive electrode active material layer that is disposed on the positive electrode current collector and that includes a complex oxide containing lithium nickel, the proportion of nickel to the total quantity of metal elements other than lithium being in the range 70-100 mol%.

## Description

### TECHNICAL FIELD

The present disclosure relates to a technology of a non-aqueous electrolyte secondary battery and a secondary battery module.

### BACKGROUND

There is a nail penetration test as a safety evaluation test for confirming resistance to an internal short circuit of a battery. The nail penetration test is, for example, a test in which a nail penetrates into a battery to simulatively generate an internal short circuit and a degree of heat generation is examined to confirm safety of the battery.

For example, Patent Literature 1 discloses a non-aqueous electrolyte secondary battery including a positive electrode that reversibly occludes lithium ions, in which the positive electrode includes an active material layer and a sheet-like current collector that supports the active material layer, the current collector contains aluminum and at least one element other than aluminum, and an average composition obtained by averaging proportions of the elements constituting the current collector in a thickness direction of the current collector is equal to a composition of an alloy having a liquidus temperature of 630°C or lower. Further, according to Patent Literature 1, since a melting point of a positive electrode current collector is suppressed to be low and the time until the positive electrode current collector is fused at the time of the nail penetration test is shortened, heat generation of the battery in the nail penetration test is suppressed.

For example, Patent Literature 2 discloses a positive electrode current collector containing Ti as a current collector exhibiting excellent corrosion resistance.

### CITATION LIST

### PATENT LITERATURE

Patent Literature 1: WO 2005/076392 A
Patent Literature 2: JP 2011-091019 A

### SUMMARY

A lithium nickel-containing composite oxide in which a proportion of Ni is 70 mol% to 100 mol% with respect to a total amount of metal elements excluding Li is expected as a positive electrode active material capable of increasing the capacity of the battery, but has a problem that a heat generation temperature of the battery in the nail penetration test is increased.

A secondary battery module according to an aspect of the present disclosure is a secondary battery module including: at least one non-aqueous electrolyte secondary battery; and an elastic body that is arranged together with the non-aqueous electrolyte secondary battery and receives a load from the non-aqueous electrolyte secondary battery in the arrangement direction, in which the non-aqueous electrolyte secondary battery includes an electrode assembly in which a positive electrode, a negative electrode, and a separator disposed between the positive electrode and the negative electrode are stacked, and a housing that accommodates the electrode assembly, a compressive modulus of elasticity of the elastic body is 5 MPa to 120 MPa, and the positive electrode includes a positive electrode current collector that contains Ti as a main component and has a thickness of 1 µm to 8 µm, and a positive electrode active material layer that is disposed on the positive electrode current collector and contains a lithium nickel-containing composite oxide in which a proportion of Ni is 70 mol% to 100 mol% with respect to a total amount of metal elements excluding Li.

A non-aqueous electrolyte secondary battery according to an aspect of the present disclosure is a non-aqueous electrolyte secondary battery including: an electrode assembly in which a positive electrode, a negative electrode, and a separator disposed between the positive electrode and the negative electrode are stacked; an elastic body that receives a load from the electrode assembly in a stacking direction of the electrode assembly; and a housing that accommodates the electrode assembly and the elastic body, in which a compressive modulus of elasticity of the elastic body is 5 MPa to 120 MPa, and the positive electrode includes a positive electrode current collector that contains Ti as a main component and has a thickness of 1 µm to 8 µm, and a positive electrode active material layer that is disposed on the positive electrode current collector and contains a lithium nickel-containing composite oxide in which a proportion of Ni is 70 mol% to 100 mol% with respect to a total amount of metal elements excluding Li.

According to an aspect of the present disclosure, in the non-aqueous electrolyte secondary battery and secondary battery module using a lithium nickel-containing composite oxide in which a proportion of Ni is 70 mol% to 100 mol% with respect to a total amount of metal elements excluding Li as a positive electrode active material, it is possible to decrease a heat generation temperature of the battery in the nail penetration test.

### BRIEF DESCRIPTION OF DRAWINGS

FIG. 1 is a perspective view of a secondary battery module according to an embodiment.
FIG. 2 is an exploded perspective view of a secondary battery module according to an embodiment.
FIG. 3 is a cross-sectional view schematically illustrating a state in which a non-aqueous electrolyte secondary battery expands.
FIG. 4 is a schematic cross-sectional view illustrating a state of an electrode assembly at the time of a nail penetration test.
FIG. 5 is a schematic cross-sectional view illustrating a state in which an elastic body is disposed in a housing.
FIG. 6 is a schematic perspective view of a cylindrically wound electrode assembly.
FIG. 7 is a schematic perspective view illustrating an example of an elastic body.
FIG. 8 is a partial schematic cross-sectional view of an elastic body interposed between an electrode assembly and a housing.

### DESCRIPTION OF EMBODIMENTS

Hereinafter, examples of embodiments will be described in detail. The drawings referred to in the description of the embodiment are schematically illustrated, and dimensional ratios and the like of components drawn in the drawings may be different from actual ones.

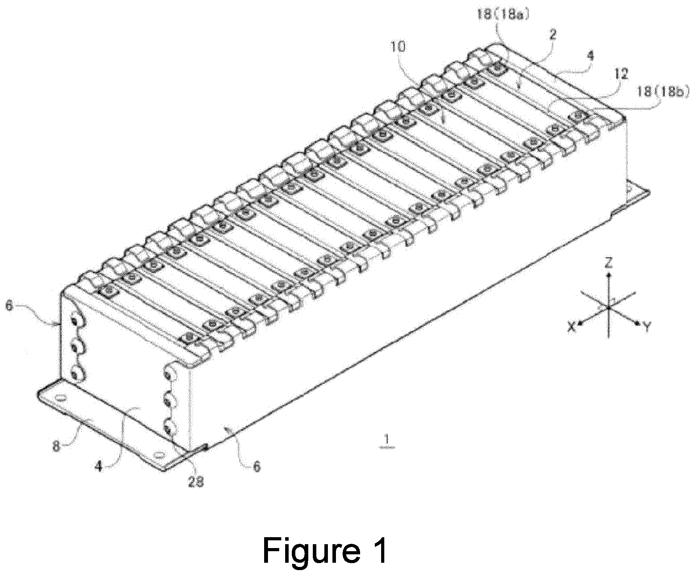

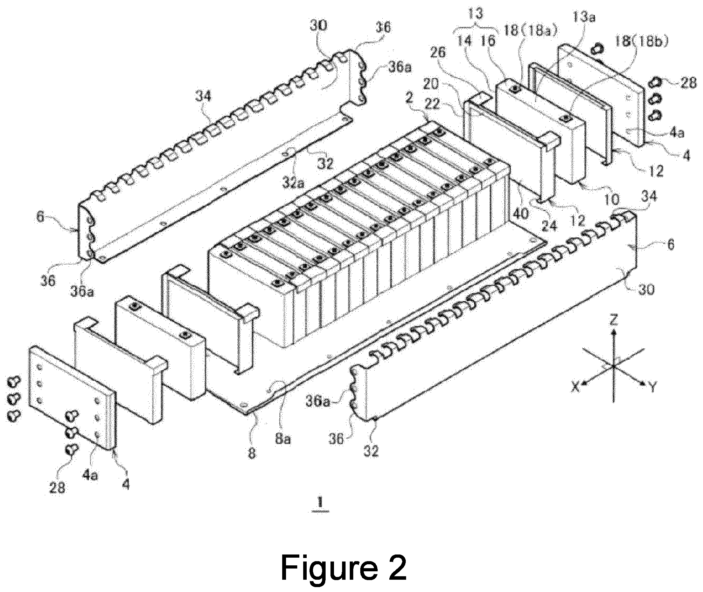

FIG. 1 is a perspective view of a secondary battery module according to an embodiment. FIG. 2 is an exploded perspective view of a secondary battery module according to an embodiment. As an example, a secondary battery module 1 includes a laminate 2, a pair of restraint members 6, and a cooling plate 8. The laminate 2 includes a plurality of non-aqueous electrolyte secondary batteries 10, a plurality of insulating spacers 12, a plurality of elastic bodies 40, and a pair of end plates 4.

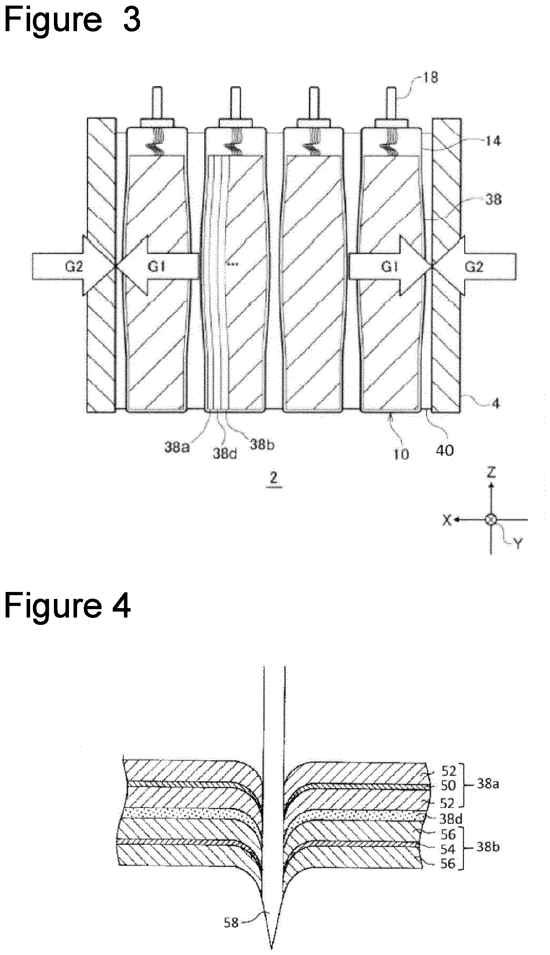

Each non-aqueous electrolyte secondary battery 10 is, for example, a chargeable/dischargeable secondary battery such as a lithium ion secondary battery. The non-aqueous electrolyte secondary battery 10 of the present embodiment is a so-called prismatic battery, and includes an electrode assembly 38 (see FIG. 3), an electrolyte liquid, and a flat rectangular parallelepiped housing 13. The housing 13 includes an exterior can 14 and a sealing plate 16. The exterior can 14 has an opening having a substantially rectangular shape on one surface thereof, and the electrode assembly 38, the electrolyte liquid, or the like is accommodated in the exterior can 14 through the opening. Note that it is desirable that the exterior can 14 is covered with an insulating film such as a shrink tube. The sealing plate 16 that seals the exterior can 14 by closing the opening is provided in the opening of the exterior can 14. The sealing plate 16 forms a first surface 13a of the housing 13. The sealing plate 16 and the exterior can 14 are joined to each other by, for example, laser, friction stir welding, or brazing.

The housing 13 may be, for example, a cylindrical case or an exterior body formed of a laminate sheet including a metal layer and a resin layer.

The electrode assembly 38 has a structure in which a plurality of sheet-like positive electrodes 38a and a plurality of sheet-like negative electrodes 38b are alternately stacked with separators 38d interposed therebetween (see FIG. 3). The positive electrode 38a, the negative electrode 38b, and the separator 38d are stacked in a first direction X. That is, the first direction X is a stacking direction of the electrode assembly 38. The electrodes located at both ends in the stacking direction face a long side surface of the housing 13 described below. Note that the first direction X, the second direction Y, and the third direction Z illustrated are directions orthogonal to each other.

The electrode assembly 38 may be a cylindrically wound electrode assembly obtained by winding a band-like positive electrode and a band-like negative electrode that are stacked with a separator interposed therebetween, or a flat wound electrode assembly obtained by molding a cylindrically wound electrode assembly into a flat shape. Note that an exterior can having a rectangular parallelepiped shape can be applied in the case of the flat wound electrode assembly, but a cylindrical exterior can is applied in the case of the cylindrically wound electrode assembly.

On the sealing plate 16, that is, on the first surface 13a of the housing 13, an output terminal 18 electrically connected to the positive electrode 38a of the electrode assembly 38 is provided at one end in a longitudinal direction, and an output terminal 18 electrically connected to the negative electrode 38b of the electrode assembly 38 is provided at the other end. Hereinafter, the output terminal 18 connected to the positive electrode 38a is referred to as a positive electrode terminal 18a, and the output terminal 18 connected to the negative electrode 38b is referred to as a negative electrode terminal 18b. In addition, in a case where it is not necessary to distinguish polarities of the pair of output terminals 18, the positive electrode terminal 18a and the negative electrode terminal 18b are collectively referred to as an output terminal 18.

The exterior can 14 has a bottom surface facing the sealing plate 16. In addition, the exterior can 14 has four side surfaces connecting the opening and the bottom surface. Two of the four side surfaces are a pair of long side surfaces connected to two opposing long sides of the opening. Each long side surface is a surface having the largest area among the surfaces of the exterior can 14, that is, a main surface. In addition, each long side surface is a side surface extending in a direction intersecting with (for example, orthogonal to) the first direction X. The remaining two side surfaces excluding the two long side surfaces are a pair of short side surfaces connected to the opening of the exterior can 14 and the short side of the bottom surface. The bottom surface, the long side surface, and the short side surface of the exterior can 14 correspond to the bottom surface, the long side surface, and the short side surface of the housing 13, respectively.

In the description of the present embodiment, for convenience, the first surface 13a of the housing 13 is an upper surface of the non-aqueous electrolyte secondary battery 10. In addition, the bottom surface of the housing 13 is a bottom surface of the non-aqueous electrolyte secondary battery 10, the long side surface of the housing 13 is a long side surface of the non-aqueous electrolyte secondary battery 10, and the short side surface of the housing 13 is a short side surface of the non-aqueous electrolyte secondary battery 10. In addition, in the secondary battery module 1, the surface of the upper surface side of the non-aqueous electrolyte secondary battery 10 is an upper surface of the secondary battery module 1, the surface of the bottom surface side of the non-aqueous electrolyte secondary battery 10 is a bottom surface of the secondary battery module 1, and the surface of the short side surface side of the non-aqueous electrolyte secondary battery 10 is a side surface of the secondary battery module 1. In addition, the upper surface side of the secondary battery module 1 is an upper side in a vertical direction, and the bottom surface side of the secondary battery module 1 is a lower side in the vertical direction.

The plurality of non-aqueous electrolyte secondary batteries 10 are arranged side by side at predetermined intervals so that the long side surfaces of adjacent non-aqueous electrolyte secondary batteries 10 face each other. In addition, in the present embodiment, the output terminals 18 of each of the non-aqueous electrolyte secondary batteries 10 are disposed so as to face each other in the same direction, but may be disposed so as to face each other in different directions.

Two adjacent non-aqueous electrolyte secondary batteries 10 are arranged (stacked) so that the positive electrode terminal 18a of one non-aqueous electrolyte secondary battery 10 and the negative electrode terminal 18b of the other non-aqueous electrolyte secondary battery 10 are adjacent to each other. The positive electrode terminal 18a and the negative electrode terminal 18b are connected in series via a bus bar. Note that the output terminals 18 having the same polarity in the plurality of adjacent non-aqueous electrolyte secondary batteries 10 may be connected in parallel by the bus bar to form a non-aqueous electrolyte secondary battery block, and the non-aqueous electrolyte secondary battery blocks may be connected in series.

The insulating spacer 12 is disposed between two adjacent non-aqueous electrolyte secondary batteries 10 to electrically insulate the two non-aqueous electrolyte secondary batteries 10 from each other. The insulating spacer 12 is formed of, for example, a resin having an insulating property. Examples of the resin constituting the insulating spacer 12 include polypropylene, polybutylene terephthalate, and polycarbonate. The plurality of non-aqueous electrolyte secondary batteries 10 and the plurality of insulating spacers 12 are alternately stacked. In addition, the insulating spacer 12 is also disposed between the non-aqueous electrolyte secondary battery 10 and the end plate 4.

The insulating spacer 12 has a plane part 20 and a wall part 22. The plane part 20 is interposed between opposing long side surfaces of two adjacent non-aqueous electrolyte secondary batteries 10. Therefore, insulation between the exterior cans 14 of the adjacent non-aqueous electrolyte secondary batteries 10 is secured.

The wall part 22 extends from an outer edge of the plane part 20 in a direction in which the non-aqueous electrolyte secondary batteries 10 are arranged, and covers a part of the upper surface, the side surface, and a part of the bottom surface of each of the non-aqueous electrolyte secondary batteries 10. Therefore, for example, a side surface distance between the adjacent non-aqueous electrolyte secondary batteries 10 or between the non-aqueous electrolyte secondary battery 10 and the end plate 4 can be secured. The wall part 22 has a notch 24 through which the bottom surface of the non-aqueous electrolyte secondary battery 10 is exposed. In addition, the insulating spacer 12 has urging force receiving parts 26 facing upward at both ends in the second direction Y.

The elastic body 40 is arranged in the first direction X together with the plurality of non-aqueous electrolyte secondary batteries 10. That is, the first direction X is also the stacking direction of the electrode assembly 38 described above, and is also the arrangement direction of the non-aqueous electrolyte secondary battery 10 and the elastic body 40. The elastic body 40 has a sheet shape, and is interposed, for example, between the long side surface of each non-aqueous electrolyte secondary battery 10 and the plane part 20 of each insulating spacer 12. The elastic body 40 disposed between two adjacent non-aqueous electrolyte secondary batteries 10 may be one sheet or a laminate in which a plurality of sheets are laminated. The elastic body 40 may be fixed to the surface of the plane part 20 by adhesion or the like. Alternatively, a recess may be provided in the plane part 20, and the elastic body 40 may be fitted into the recess. Alternatively, the elastic body 40 and the insulating spacer 12 may be integrally molded. Alternatively, the elastic body 40 may also serve as the plane part 20.

The plurality of non-aqueous electrolyte secondary batteries 10 arranged side by side, the plurality of insulating spacers 12, and the plurality of elastic bodies 40 are interposed between the pair of end plates 4 in the first direction X. The end plate 4 is formed of, for example, a metal plate or a resin plate. The end plate 4 is provided with a screw hole 4a that penetrates through the end plate 4 in the first direction X and allows a screw 28 to be screwed.

The pair of restraint members 6 are elongated members whose longitudinal direction is the first direction X. The pair of restraint members 6 are arranged so as to face each other in the second direction Y. The laminate 2 is interposed between the pair of restraint members 6. Each restraint member 6 has a main body part 30, a support part 32, a plurality of urging parts 34, and a pair of fixing parts 36.

The main body part 30 is a rectangular part extending in the first direction X. The main body part 30 extends in parallel to the side surface of each non-aqueous electrolyte secondary battery 10. The support part 32 extends in the first direction X and protrudes in the second direction Y from a lower end of the main body part 30. The support part 32 is a plate-like body continuous in the first direction X and supports the laminate 2.

The plurality of urging parts 34 are connected to an upper end of the main body part 30 and protrude in the second direction Y. The support part 32 and the urging part 34 face each other in the third direction Z. The plurality of urging parts 34 are arranged in the first direction X at predetermined intervals. Each urging part 34 has, for example, a leaf spring shape, and urges each non-aqueous electrolyte secondary battery 10 toward the support part 32.

The pair of fixing parts 36 are plate-like bodies protruding in the second direction Y from both ends of the main body part 30 in the first direction X. The pair of fixing parts 36 face each other in the first direction X. Each fixing part 36 is provided with a through-hole 36a through which the screw 28 is inserted. The restraint member 6 is fixed to the laminate 2 by the pair of fixing parts 36.

The cooling plate 8 is mechanism for cooling the plurality of non-aqueous electrolyte secondary batteries 10. The laminate 2 is placed on a main surface of the cooling plate 8 in a state of being restrained by the pair of restraint members 6, and is fixed to the cooling plate 8 by inserting a fastening member such as a screw into a through-hole 32a of the support part 32 and a through-hole 8a of the cooling plate 8.

FIG. 3 is a cross-sectional view schematically illustrating a state in which a non-aqueous electrolyte secondary battery expands. Note that in FIG. 3, the number of non-aqueous electrolyte secondary batteries 10 is thinned out. In addition, illustration of the internal structure of the non-aqueous electrolyte secondary battery 10 is simplified, and illustration of the insulating spacer 12 is omitted. As illustrated in FIG. 3, the electrode assembly 38 (the positive electrode 38a, the negative electrode 38b, and the separator 38d) is accommodated inside each non-aqueous electrolyte secondary battery 10. In the non-aqueous electrolyte secondary battery 10, the exterior can 14 expands and contracts due to expansion and contraction of the electrode assembly 38 caused by charging and discharging. When the exterior can 14 of each non-aqueous electrolyte secondary battery 10 expands, a load G1 directed outward in the first direction X is generated in the laminate 2. That is, the elastic body 40 arranged together with the non-aqueous electrolyte secondary battery 10 receives a load in the first direction X (the stacking direction of the electrode assembly 38 that is the arrangement direction of the non-aqueous electrolyte secondary battery 10 and the elastic body 40) from the non-aqueous electrolyte secondary battery 10. On the other hand, a load G2 corresponding to the load G1 is applied to the laminate 2 by the restraint member 6.

FIG. 4 is a schematic cross-sectional view illustrating a state of an electrode assembly at the time of a nail penetration test. As illustrated in FIG. 4, the positive electrode 38a includes a positive electrode current collector 50 and a positive electrode active material layer 52 formed on the positive electrode current collector 50, and the negative electrode 38b includes a negative electrode current collector 54 and a negative electrode active material layer 56 formed on the negative electrode current collector 54. Then, a nail penetrates into the non-aqueous electrolyte secondary battery by a nail penetration test, a nail 58 penetrates through the positive electrode 38a and the separator 38d and reaches the negative electrode 38b, and the positive electrode current collector 50 and the negative electrode current collector 54 come into direct contact with the nail 58 as illustrated in FIG. 4, an internal short circuit occurs, a short circuit current flows, and the non-aqueous electrolyte secondary battery generates heat.

Here, the positive electrode active material layer 52 of the present embodiment contains a lithium nickel-containing composite oxide in which a proportion of Ni is 70 mol% to 100 mol% with respect to the total amount of metal elements excluding Li. The lithium nickel-containing composite oxide is a positive electrode active material having a high capacity, but has a large heat generation amount at the time of an internal short circuit by the nail penetration test. Therefore, a non-aqueous electrolyte secondary battery using a lithium nickel-containing composite oxide in which a proportion of Ni is 70 mol% to 100 mol% with respect to the total amount of metal elements excluding Li has a problem that a heat generation temperature of the battery in the nail penetration test is high.

Therefore, in the present embodiment, a Ti-containing positive electrode current collector containing Ti as a main component and having a thickness of 1 µm to 8 µm is used as the positive electrode current collector 50, such that the heat generation temperature of the battery in the nail penetration test is decreased. Since the Ti-containing positive electrode current collector has higher fusibility when a short circuit current flows in comparison to a positive electrode current collector containing Al as a main component, the heat generation temperature of the battery in the nail penetration test is decreased by using the Ti-containing positive electrode current collector. A thickness of the positive electrode current collector containing Ti as a main component is preferable in the above range from the viewpoint of producing a positive electrode.

Furthermore, in the present embodiment, the heat generation temperature of the battery in the nail penetration test is further decreased by using an elastic body having a compressive modulus of elasticity of 5 MPa to 120 MPa as the elastic body 40. Since the load G1 directed outward in the first direction X and the load G2 corresponding to the load G1 are relaxed by using the elastic body having a compressive modulus of elasticity of 5 MPa to 120 MPa, excessive proximity between the positive electrode 38a and the negative electrode 38b is suppressed. Therefore, an increase in area of the short-circuited portion (the portion of the positive electrode current collector in direct contact with the nail) of the positive electrode current collector 50 is suppressed in the nail penetration test in comparison to a case where the Ti-containing positive electrode current collector described above is used, but the elastic body having a compressive modulus of elasticity of 5 MPa to 120 MPa is not disposed or an elastic body having a compressive modulus of elasticity of more than 120 MPa is disposed, such that the fusing of the positive electrode current collector at the short-circuited portion is accelerated, and the heat generation temperature of the battery in the nail penetration test is further decreased.

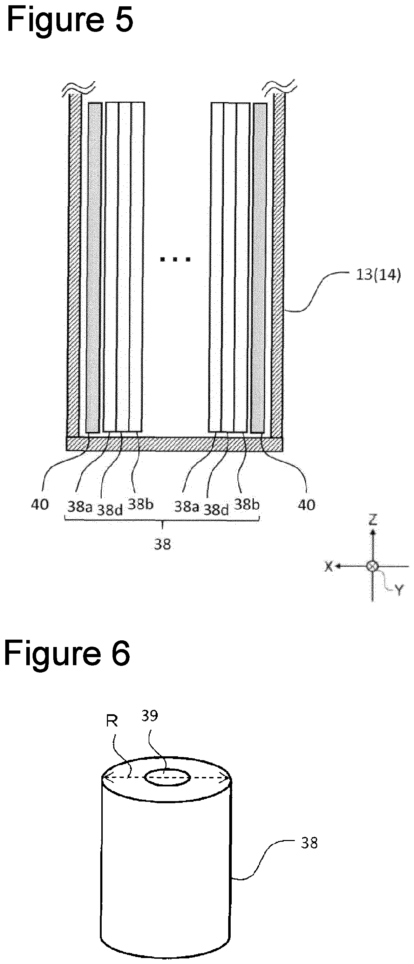

FIG. 5 is a schematic cross-sectional view illustrating a state in which an elastic body is disposed in a housing. The elastic body 40 is not limited to the case of being arranged together with the non-aqueous electrolyte secondary battery 10, that is, the case of being disposed outside the housing 13, and may be disposed inside the housing 13. The elastic body 40 illustrated in FIG. 5 is disposed at both ends of the electrode assembly 38 in the stacking direction (the first direction X) of the electrode assembly 38. In addition, the elastic body 40 is interposed between an inner wall of the housing 13 and the electrode assembly 38.

When the electrode assembly 38 expands due to charging and discharging of the non-aqueous electrolyte secondary battery 10 or the like, a load directed outward in the first direction X is generated in the electrode assembly 38. That is, the elastic body 40 disposed in the housing 13 receives a load in the first direction X (the stacking direction of the electrode assembly 38) from the electrode assembly 38. When the elastic body 40 has a compressive modulus of elasticity of 5 MPa to 120 MPa, and the positive electrode current collector 50 is a Ti-containing positive electrode current collector containing Ti as a main component and having a thickness of 1 µm to 8 µm, the same action and effect as described above can be obtained.

The elastic body 40 in the housing 13 may be disposed anywhere as long as it can receive a load in the stacking direction of the electrode assembly 38 from the electrode assembly 38. For example, when the electrode assembly 38 is a cylindrically wound electrode assembly 38 illustrated in FIG. 6, the elastic body 40 may be disposed in a winding core part 39 of the cylindrically wound electrode assembly 38. Note that a stacking direction of the cylindrically wound electrode assembly 38 is a radial direction (R) of the electrode assembly 38. As the electrode assembly 38 expands and contracts, a load is generated in the electrode assembly 38 in the stacking direction of the electrode assembly 38 (the radial direction (R) of the electrode assembly 38), and the elastic body 40 in the winding core part 39 receives a load in the stacking direction of the electrode assembly 38. In addition, although not illustrated in the drawings, when a plurality of electrode assemblies 38 are arranged in the housing 13, the elastic body 40 may be disposed between the adjacent electrode assemblies 38. In addition, similarly, in the case of the flat wound type, the elastic body may be disposed at the center of the electrode assembly.

Hereinafter, the positive electrode 38a, the negative electrode 38b, the separator 38d, the elastic body 40, and the electrolyte liquid will be described in detail.

The positive electrode 38a includes the positive electrode current collector 50 and the positive electrode active material layer 52 formed on the positive electrode current collector 50. The positive electrode current collector 50 is a positive electrode current collector containing Ti as a main component and having a thickness of 1 µm to 8 µm. Containing Ti as a main component means that a content of Ti in the positive electrode current collector 50 is 50% by mass or more. The content of Ti in the positive electrode current collector 50 is, for example, preferably 75% by mass or more, and more preferably 90% by mass or more, from the viewpoint of enhancing the fusibility of the positive electrode current collector 50. The positive electrode current collector 50 may contain an element other than Ti, and examples thereof include Fe, Si, N, C, O, and H. For example, contents thereof are preferably 0.01% to 0.2% of Fe, 0.011% to 0.02% of Si, 0.001% to 0.02% of N, 0.001% to 0.02% of C, 0.04% to 0.14% of O, and 0.003% to 0.01% of H. The thickness of the positive electrode current collector 50 is, for example, preferably 2 µm to 7 µm, and more preferably 3 µm to 6 µm, from the viewpoint of enhancing the fusibility of the positive electrode current collector 50, improving an elongation percentage of the positive electrode current collector 50 to suppress peeling of the positive electrode active material layer 52, or improving the mechanical strength.

The positive electrode active material layer 52 contains a positive electrode active material. The positive electrode active material layer 52 preferably contains a conductive agent or a binder in addition to the positive electrode active material. The positive electrode active material layer 52 is preferably provided on both surfaces of the positive electrode current collector 50.

The positive electrode active material contains a lithium nickel-containing composite oxide in which a proportion of Ni is 70 mol% to 100 mol% with respect to the total amount of metal elements excluding Li. The proportion of Ni in the lithium nickel-containing composite oxide is, for example, preferably in a range of 80 mol% to 98 mol%, more preferably in a range of 82 mol% to 89 mol%, with respect to the total amount of metal elements excluding Li, from the viewpoint of increasing the capacity of the battery, decreasing the heat generation temperature of the battery in the nail penetration test, and the like. The lithium nickel-containing composite oxide may contain elements other than Ni, and examples thereof include Co, Mn, Al, B, Mg, Ti, V, Cr, Fe, Cu, Zn, Ga, Sr, Zr, Nb, In, Sn, Ta, and W. Among them, it is preferable to contain at least one of Co, Mn, and Al. Examples of a preferred composite oxide include a composite oxide containing Li, Ni, Co, and Mn and a composite oxide containing Li, Ni, Co, and Al.

The lithium nickel-containing composite oxide described above is preferably contained in an amount of 80% by mass or more, and more preferably contained in an amount of 90% by mass or more in the positive electrode active material, from the viewpoint of increasing the capacity of the non-aqueous electrolyte secondary battery. Note that the positive electrode active material may contain not only the lithium nickel-containing composite oxide described above but also other positive electrode active materials. The other positive electrode active materials are not particularly limited as long as they are compounds capable of reversibly inserting and removing lithium ions.

Examples of the conductive agent include carbon materials such as carbon black, acetylene black, Ketjenblack, and graphite. Examples of the binder include a fluorine resin such as polytetrafluoroethylene (PTFE) or polyvinylidene fluoride (PVdF), polyacrylonitrile (PAN), a polyimide resin, an acrylic resin, and a polyolefin resin. In addition, these resins may be used in combination with a cellulose derivative such as carboxymethyl cellulose (CMC) or a salt thereof, polyethylene oxide (PEO), or the like.

The positive electrode 38a can be produced by applying a positive electrode mixture slurry containing a positive electrode active material, a conductive agent, a binder, and the like on the positive electrode current collector 50, drying and then compressing the coating film, and forming the positive electrode active material layer 52 on the positive electrode current collector 50. As described above, the positive electrode current collector 50 has a thickness in a range of 1 µm to 8 µm to increase the elongation percentage of the positive electrode current collector 50, such that even when rolling is performed at the time of producing the positive electrode 38a, a difference between the elongation percentage of the positive electrode active material layer 52 and the elongation percentage of the positive electrode current collector 50 is small, and the positive electrode active material layer 52 is suppressed from being peeled off from the positive electrode current collector 50.

The negative electrode 38b includes the negative electrode current collector 54 and the negative electrode active material layer 56 formed on the negative electrode current collector 54. As the negative electrode current collector 54, a foil of a metal stable in a potential range of the negative electrode 38b, a film disposed on a surface layer of the metal, or the like is used, and for example, copper or the like is used.

The negative electrode active material layer 56 contains a negative electrode active material. The negative electrode active material layer 56 preferably contains a binder and the like. The binder may be the same as the binder contained in the positive electrode active material layer 52. The negative electrode active material layer 56 is preferably formed on both surfaces of the negative electrode current collector 54.

Examples of the negative electrode active material include active materials capable of reversibly occluding and releasing lithium ions, and specific examples thereof include a carbon material such as natural graphite, artificial graphite, non-graphitizable carbon, or easily-graphitizable carbon, a surface-modified carbon material in which a surface of the carbon material is covered with an amorphous carbon film, a metal alloyed with lithium such as silicon (Si) or tin (Sn), an alloy containing a metal element such as Si or Sn, and an oxide containing a metal element such as Si or Sn. These negative electrode active materials may be used alone or in combination of two or more thereof.

The negative electrode 38b can be produced by applying a negative electrode mixture slurry containing a negative electrode active material, a binder, and the like on the negative electrode current collector 54, drying and then compressing the coating film, and forming the negative electrode active material layer 56 on the negative electrode current collector 54.

For example, a porous sheet having an ion permeation property and an insulation property is used for the separator 38d. Specific examples of the porous sheet include a fine porous thin film, a woven fabric, and a non-woven fabric. As a material of the separator 38d, an olefin-based resin such as polyethylene or polypropylene, cellulose, and the like are preferable. The separator 38d may be a laminate including a cellulose fiber layer and a thermoplastic resin fiber layer formed of an olefin-based resin or the like. In addition, a multi-layer separator including a polyethylene layer and a polypropylene layer may be used, or a separator obtained by applying a material such as an aramid-based resin or ceramic onto a surface of the separator 38d may be used.

Examples of a material constituting the elastic body 40 include a thermosetting elastomer such as natural rubber, urethane rubber, silicone rubber, or fluororubber, and a thermoplastic elastomer such as polystyrene, olefin, polyurethane, polyester, or polyamide. Note that these materials may be foamed. In addition, a heat insulating material on which a porous material such as silica xerogel is supported is also exemplified.

In the present embodiment, it is preferable to define the compressive modulus of elasticity of each of the negative electrode active material layer 56, the separator 38d, and the elastic body 40 as follows. It is preferable that the compressive modulus of elasticity of the separator 38d is smaller than the compressive modulus of elasticity of the negative electrode active material layer 56, and the compressive modulus of elasticity of the elastic body 40 is smaller than the compressive modulus of elasticity of the separator 38d. That is, the compressive modulus of elasticity is high in the order of the negative electrode active material layer 56, the separator 38d, and the elastic body 40. Therefore, among them, the negative electrode active material layer 56 is most hardly deformed, and the elastic body 40 is most easily deformed. By defining the compressive modulus of elasticity of each member as described above, for example, retention of the electrolyte liquid in the electrode assembly 38 is improved, such that it is possible to suppress an increase in resistance in high rate charging and discharging. In addition, for example, since the excessive proximity between the positive electrode 38a and the negative electrode 38b is further alleviated, the heat generation temperature of the battery in the nail penetration test can be further decreased. The compressive modulus of elasticity of the separator 38d is, for example, preferably 0.3 times to 0.7 times the compressive modulus of elasticity of the negative electrode active material layer 56, and more preferably 0.4 times to 0.6 times the compressive modulus of elasticity of the negative electrode active material layer 56, from the viewpoint of effectively suppressing an increase in resistance in high rate charging and discharging. The compressive modulus of elasticity of the elastic body 40 may be in a range of 5 MPa to 120 MPa, and is preferably in a range of 25 MPa to 100 MPa.

The compressive modulus of elasticity is calculated by dividing the amount of deformation of a sample in a thickness direction when a predetermined load is applied to the sample in the thickness direction by a compressive area and multiplying the obtained value by a sample thickness. That is, the compressive modulus of elasticity is calculated by the following equation: compressive modulus of elasticity (MPa) = load (N)/compressive area (mm²) × (deformation amount (mm) of sample/sample thickness (mm)). However, when the compressive modulus of elasticity of the negative electrode active material layer 56 is measured, the compressive modulus of elasticity of the negative electrode current collector 54 is measured, and the compressive modulus of elasticity of the negative electrode 38b in which the negative electrode active material layer 56 is formed on the negative electrode current collector 54 is measured. Then, the compressive modulus of elasticity of the negative electrode active material layer 56 is calculated based on the compressive modulus of elasticity of each of the negative electrode current collector 54 and the negative electrode 38b. In addition, when the compressive modulus of elasticity of the negative electrode active material layer 56 is determined from the produced negative electrode 38b, the compressive modulus of elasticity of the negative electrode 38b is measured, the compressive modulus of elasticity of the negative electrode current collector 54 obtained by scraping the negative electrode active material layer 56 from the negative electrode 38b, and the compressive modulus of elasticity of the negative electrode active material layer 56 is calculated based on these measured compressive moduli of elasticity.

An example of a method of adjusting the compressive modulus of elasticity of the negative electrode active material layer 56 includes a method of adjusting a rolling force applied to the negative electrode mixture slurry formed on the negative electrode current collector 54. In addition, for example, the compressive modulus of elasticity of the negative electrode active material layer 56 can also be adjusted by changing a material and physical properties of the negative electrode active material. Note that the adjustment of the compressive modulus of elasticity of the negative electrode active material layer 56 is not limited to the above. The compressive modulus of elasticity of the separator 38d is adjusted by, for example, selection of a material and control of a porosity, a hole diameter, or the like. The compressive modulus of elasticity of the elastic body 40 is adjusted by, for example, selection of a material, a shape, or the like.

The elastic body 40 may have a uniform compressive modulus of elasticity on one surface, and may have a structure having different ease of in-plane deformation as described below.

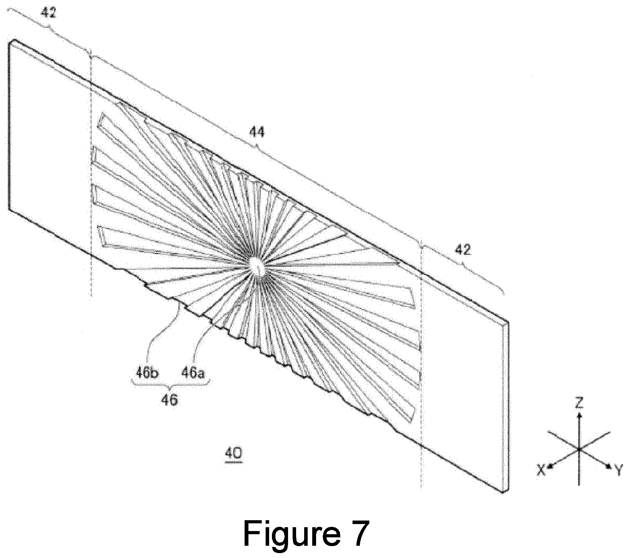

FIG. 7 is a schematic perspective view illustrating an example of an elastic body. The elastic body 40 illustrated in FIG. 7 has a soft part 44 and a hard part 42. The hard part 42 is positioned closer to an outer edge side of the elastic body 40 than the soft part 44. The elastic body 40 illustrated in FIG. 7 has a structure in which the hard part 42 is disposed on both end sides in the second direction Y and the soft part 44 is disposed between two hard parts 42. The soft part 44 is preferably disposed so as to overlap with the center of the long side surface of the housing 13 and disposed so as to overlap with the center of the electrode assembly 38, when viewed in the first direction X. In addition, the hard part 42 is preferably disposed so as to overlap with the outer edge of the long side surface of the housing 13 and disposed so as to overlap with the outer edge of the electrode assembly 38, when viewed in the first direction X.

As described above, the expansion of the non-aqueous electrolyte secondary battery 10 is mainly caused by expansion of the electrode assembly 38. The electrode assembly 38 expends more greatly toward the center. That is, the electrode assembly 38 is more greatly displaced in the first direction X toward the center, and is less displaced toward the outer edge from the center. In addition, in accordance with the displacement of the electrode assembly 38, the non-aqueous electrolyte secondary battery 10 is displaced more in the first direction X toward the center of the long side surface of the housing 13, and is displaced less toward the outer edge from the center of the long side surface of the housing 13. Therefore, in a case where the elastic body 40 illustrated in FIG. 7 is disposed in the housing 13, the elastic body 40 can receive a large load generated by a large displacement of the electrode assembly 38 in the soft part 44, and the elastic body 40 can receive a small load generated by a small displacement of the electrode assembly 38 in the hard part 42. In addition, in a case where the elastic body 40 illustrated in FIG. 7 is disposed outside the housing 13, the elastic body 40 can receive a large load generated by a large displacement of the non-aqueous electrolyte secondary battery 10 in the soft part 44, and the elastic body 40 can receive a small load generated by a small displacement of the non-aqueous electrolyte secondary battery 10 in the hard part 42.

The elastic body 40 illustrated in FIG. 7 has a recess 46 recessed in the first direction X. When a load is applied from the non-aqueous electrolyte secondary battery 10 or the electrode assembly 38, a part of a recess non-forming part adjacent to the recess 46 can be displaced toward the recess 46. Therefore, the recess non-forming part can be easily deformed by providing the recess 46. Here, in order to make the soft part 44 more easily deformed than the hard part 42, it is preferable that a proportion of an area of the recess 46 to an area of the soft part 44 is larger than a proportion of the area of the recess 46 to an area of the hard part 42 when viewed from the first direction X. Note that in the elastic body 40 illustrated in FIG. 7, the recess 46 is disposed only in the soft part 44, and the recess 46 may be disposed in the hard part 42.

The recess 46 has a core part 46a and a plurality of line parts 46b. The core part 46a has a circular shape and is disposed at the center of the elastic body 40 as viewed in the first direction X. The plurality of line parts 46b radially extend from the core part 46a. The line part 46b radially extends, such that as it is closer to the core part 46a, the proportion of the line part 46b is increased, and the recess non-forming part is reduced. Therefore, the recess non-forming part is more easily deformed in the region closer to the core part 46a.

In addition, although not illustrated in the drawings, the elastic body 40 may have a plurality of through-holes penetrating through the elastic body 40 in the first direction X instead of the recess 46 or together with the recess 46. A through-hole non-forming part can be easily deformed by providing the through-holes. Therefore, in order to make the soft part 44 more easily deformed than the hard part 42, it is preferable that a ratio of an area of the through-hole to the area of the soft part 44 is larger than a ratio of the area of the through-hole to an area of the hard part 42 when viewed from the first direction X.

Hereinafter, another example of the elastic body will be described.

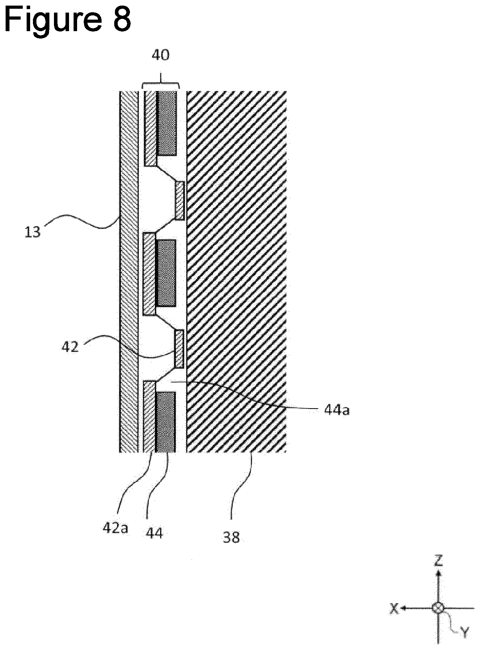

FIG. 8 is a partial schematic cross-sectional view of an elastic body interposed between an electrode assembly and a housing. The elastic body 40 receives a load in the stacking direction (the first direction X) of the electrode assembly 38 from the electrode assembly 38. The elastic body 40 has a base material 42a on which the hard part 42 having a predetermined hardness is formed and the soft part 44 softer than the hard part 42. The hard part 42 is a protrusion part protruding from the base material 42a toward the electrode assembly 38 and is broken or plastically deformed by receiving a predetermined load or more. The soft part 44 has a sheet shape, and the hard part 42 is disposed closer to the electrode assembly 38 than the base material 42a on which the soft part is formed. However, the soft part 44 is separated from the electrode assembly 38. The soft part 44 has a through-hole 44a at a position overlapping the hard part 42 when viewed from the first direction X, the hard part 42 is inserted into the through-hole 44a, and a tip end of the hard part 42 protrudes from the soft part 44.

As the shape of the hard part 42 is changed, the elastic body 40 shifts from a first state in which a load from the electrode assembly 38 is received by the hard part 42 to a second state in which the load is received by the soft part 44. That is, the elastic body 40 first receives a load in the stacking direction of the electrode assembly 38 due to expansion of the electrode assembly 38 by the hard part 42 (first state). Thereafter, when an expansion amount of the electrode assembly 38 is increased for some reason and a load that cannot be received by the hard part 42 is applied to the hard part 42, the hard part 42 is broken or plastically deformed, the electrode assembly 38 comes into contact with the soft part 44, and a load in the stacking direction of the electrode assembly 38 is received by the soft part 44 (second state).

Note that in a case of an elastic body having an irregularity shape, a compressive modulus of elasticity is calculated from Compressive modulus of elasticity (MPa) = load (N)/projected area in plane direction of elastic body (mm²) × (deformation amount of elastic body (mm)/thickness to projection of elastic body (mm)).

The electrolyte liquid is, for example, a non-aqueous electrolyte liquid containing a supporting salt in an organic solvent (non-aqueous solvent). As the non-aqueous solvent, for example, esters, ethers, nitriles, amides, a mixed solvent of two or more thereof, and the like are used. As the supporting salt, for example, a lithium salt such as LiPF₆ is used.

### <EXAMPLES>

### <Experimental Example 1>

### [Production of Positive Electrode]

As a positive electrode active material, a lithium nickel-containing composite oxide represented by General Formula LiNi_{0.91}Co_{0.06}Al_{0.03}O₂ was used. The positive electrode active material, acetylene black, and polyvinylidene fluoride were mixed at a solid content mass ratio of 97:2:1, and N-methyl-2-pyrrolidone (NMP) was used as a dispersion medium to prepare a positive electrode mixture slurry.

A Ti foil having a thickness of 5 µm was prepared as a positive electrode current collector. The positive electrode mixture slurry was applied to both surfaces of the Ti foil, the coating film was dried and rolled, and then, the coating film was cut into a predetermined electrode size, thereby obtaining a positive electrode in which a positive electrode active material layer was formed on both surfaces of a positive electrode current collector.

### [Production of Negative Electrode]

Graphite particles as a negative electrode active material, a dispersion of SBR, and CMC-Na were mixed at a solid content mass ratio of 100:1:1.5, and water was used as a dispersion medium to prepare a negative electrode mixture slurry. The negative electrode mixture slurry was applied to both surfaces of a negative electrode current collector formed of a copper foil, the coating film was dried and rolled, and then, the coating film was cut into a predetermined electrode size, thereby obtaining a negative electrode in which a negative electrode active material layer was formed on both surfaces of a negative electrode current collector. At the time of producing the negative electrode, a compressive modulus of elasticity of the negative electrode active material layer was measured, the compressive modulus of elasticity of the negative electrode active material layer was 660 MPa.

### [Preparation of Electrolyte Liquid]

Ethylene carbonate (EC), methylethyl carbonate (EMC), and dimethyl carbonate (DMC) were mixed at a volume ratio of 3:3:4. LiPF₆ was dissolved in the mixed solvent so as to have a concentration of 1.4 mol/L to prepare an electrolyte liquid.

### [Production of Non-Aqueous Electrolyte Secondary Battery]

A plurality of negative electrodes, a plurality of separators having a compressive modulus of elasticity of 130 MPa, and a plurality of positive electrodes were stacked in this order to prepare an electrode assembly. Then, the negative electrode and the positive electrode were connected to a positive electrode terminal and a negative electrode terminal, respectively, and these electrodes and electrode terminals were accommodated in an exterior body formed of an aluminum laminate, the electrolyte liquid was injected, and an opening of the exterior body was sealed, thereby producing a non-aqueous electrolyte secondary battery.

A secondary battery module (with an elastic body) was produced by interposing the produced non-aqueous electrolyte secondary battery between a pair of elastic bodies (foam urethane having a compressive modulus of elasticity of 60 MPa) and further interposing and fixing these elastic bodies between a pair of end plates, and a secondary battery module (with no elastic body) was produced by interposing and fixing the produced non-aqueous electrolyte secondary battery between a pair of end plates.

### <Experimental Example 2>

A secondary battery module with an elastic body and a secondary battery module with no elastic body were produced in the same manner as that of Experimental Example 1, except that a lithium nickel-containing composite oxide represented by General Formula LiNi_{0.85}Co_{0.05}Mn_{0.10}O₂ was used as a positive electrode active material and a Ti foil having a thickness of 1 µm was used as a positive electrode current collector.

### <Experimental Example 3>

A secondary battery module with an elastic body and a secondary battery module with no elastic body were produced in the same manner as that of Experimental Example 1, except that the lithium nickel-containing composite oxide of Experimental Example 2 was used as a positive electrode active material.

### <Experimental Example 4>

A secondary battery module with an elastic body and a secondary battery module with no elastic body were produced in the same manner as that of Experimental Example 1, except that the lithium nickel-containing composite oxide of Experimental Example 2 was used as a positive electrode active material and a Ti foil having a thickness of 8 µm was used as a positive electrode current collector.

### <Experimental Example 5>

A secondary battery module with an elastic body and a secondary battery module with no elastic body were produced in the same manner as that of Experimental Example 1, except that the lithium nickel-containing composite oxide of Experimental Example 2 was used as a positive electrode active material and foam urethane having a compressive modulus of elasticity of 40 MPa was used as an elastic body.

### <Experimental Example 6>

A secondary battery module with an elastic body and a secondary battery module with no elastic body were produced in the same manner as that of Experimental Example 1, except that the lithium nickel-containing composite oxide of Experimental Example 2 was used as a positive electrode active material and foam urethane having a compressive modulus of elasticity of 5 MPa was used as an elastic body.

### <Experimental Example 7>

A secondary battery module with an elastic body and a secondary battery module with no elastic body were produced in the same manner as that of Experimental Example 1, except that the lithium nickel-containing composite oxide of Experimental Example 2 was used as a positive electrode active material and foam urethane having a compressive modulus of elasticity of 120 MPa was used as an elastic body.

### <Experimental Example 8>

A secondary battery module with an elastic body and a secondary battery module with no elastic body were produced in the same manner as that of Experimental Example 1, except that the lithium nickel-containing composite oxide represented by General Formula LiNi_{0.70}Co_{0.15}Mn_{0.15}O₂ was used as a positive electrode active material.

### <Experimental Example 9>

A secondary battery module with an elastic body and a secondary battery module with no elastic body were produced in the same manner as that of Experimental Example 1, except that the lithium nickel-containing composite oxide of Experimental Example 2 was used as a positive electrode active material, a separator having a compressive modulus of elasticity of 80 MPa was used, and foam urethane having a compressive modulus of elasticity of 120 MPa was used as an elastic body.

### <Experimental Example 10>

An attempt was made to produce a secondary battery module in the same manner as that of Experimental Example 1 except that the lithium nickel-containing composite oxide of Experimental Example 2 was used as a positive electrode active material and a Ti foil having a thickness of 10 µm was used as a positive electrode current collector, but a secondary battery module could not be produced because the positive electrode active material layer was peeled off from the positive electrode current collector.

### <Experimental Example 11>

A secondary battery module with an elastic body and a secondary battery module with no elastic body were produced in the same manner as that of Experimental Example 1, except that the lithium nickel-containing composite oxide of Experimental Example 2 was used as a positive electrode active material and foam urethane having a compressive modulus of elasticity of 130 MPa was used as an elastic body.

### <Experimental Example 12>

A secondary battery module with an elastic body and a secondary battery module with no elastic body were produced in the same manner as that of Experimental Example 1, except that the lithium nickel-containing composite oxide of Experimental Example 2 was used as a positive electrode active material and an Al foil having a thickness of 12 µm was used as a positive electrode current collector.

### [Evaluation of Heat Generation Temperature of Battery in Nail Penetration Test]

Each of the secondary battery modules of Experimental Examples was adjusted to a state of charge of SOC 100% under a temperature condition of 25°C. Next, a needle having a radius of 0.5 mm and a tip end curvature ϕ of 0.9 mm was penetrated at a speed of 0.1 mm/sec so as to communicate the positive electrode and the negative electrode in a thickness direction of the non-aqueous electrolyte secondary battery, thereby generating an internal short circuit. The battery surface temperature was measured one minute after the occurrence of the internal short circuit.

Table 1 shows the physical properties of each of the positive electrode active material, the positive electrode current collector, the elastic body, the separator, and the negative electrode active material layer used in Experimental Examples and the test results of each of Experimental Examples.

**[Table 1]**

| | Positive electrode active material | Positive electrode current collector | | Negative electrode active material layer | Separator | Elastic body | Heat generation temperature of battery in nail penetration test (°C) | |
|---|---|---|---|---|---|---|---|---|
| | Proportion of Ni with respect to total amount of metal elements excluding Li (mol%) | Material | Thickness (µm) | Compressive modulus of elasticity (MPa) | Compressive modulus of elasticity (MPa) | Compressive modulus of elasticity (MPa) | Absence of elastic body | Presence of elastic body |
| Experimental Example 1 | 91 | Ti | 5 | 660 | 130 | 60 | 197 | 171 |
| Experimental Example 2 | 85 | Ti | 1 | 660 | 130 | 60 | 188 | 165 |
| Experimental Example 3 | 85 | Ti | 5 | 660 | 130 | 60 | 178 | 153 |
| Experimental Example 4 | 85 | Ti | 8 | 660 | 130 | 60 | 171 | 150 |
| Experimental Example 5 | 85 | Ti | 5 | 660 | 130 | 40 | 178 | 144 |
| Experimental Example 6 | 85 | Ti | 5 | 660 | 130 | 5 | 178 | 135 |
| Experimental Example 7 | 85 | Ti | 5 | 660 | 130 | 120 | 178 | 164 |
| Experimental Example 8 | 70 | Ti | 5 | 660 | 130 | 60 | 162 | 150 |
| Experimental Example 9 | 85 | Ti | 5 | 660 | 80 | 120 | 178 | 169 |
| Experimental Example 10 | 85 | Ti | 10 | 660 | 130 | 60 | Impossible to produce battery | |
| Experimental Example 11 | 85 | Ti | 5 | 660 | 130 | 130 | 178 | 176 |
| Experimental Example 12 | 85 | A1 | 12 | 660 | 130 | 60 | 408 | 405 |

As can be seen from the results of Experimental Examples 1 to 9, in the secondary battery module using, as a positive electrode active material, a lithium nickel-containing composite oxide in which a ratio of Ni was 70 mol% to 100 mol% with respect to the total amount of metal elements excluding Li, although the positive electrode current collector was used in the secondary battery module in which a positive electrode current collector containing Ti as a main component and having a thickness of 1 µm to 8 µm was used and an elastic body having a compressive modulus of elasticity of 5 MPa to 120 MPa was disposed, the heat generation temperature of the battery in the nail penetration test was decreased in comparison to the secondary battery module in which the elastic body was not disposed. In addition, as can be seen from the result of Experimental Example 11, in the case of the secondary battery module in which an elastic body having a compressive modulus of elasticity of more than 120 MPa was disposed, the heat generation temperature of the battery in the nail penetration test was hardly decreased in comparison to the secondary battery module in which an elastic body was not disposed.

### REFERENCE SIGNS LIST

- 1: Secondary battery module
- 2: Laminate
- 4: End plate
- 6: Restraint member
- 8: Cooling plate
- 10: Non-aqueous electrolyte secondary battery
- 12: Insulating spacer
- 13: Housing
- 14: Exterior can
- 16: Sealing plate
- 18: Output terminal
- 38: Electrode assembly
- 38a: Positive electrode
- 38b: Negative electrode
- 38d: Separator
- 39: Winding core part
- 40: Elastic body
- 42: Hard part
- 42a: Base material
- 44: Soft part
- 44a: Through-hole
- 46: Recess
- 46a: Core part
- 46b: Line part
- 50: Positive electrode current collector
- 52: Positive electrode active material layer
- 54: Negative electrode current collector
- 56: Negative electrode active material layer
- 58: Nail

## Claims

1. A secondary battery module comprising: at least one non-aqueous electrolyte secondary battery; and an elastic body that is arranged together with the non-aqueous electrolyte secondary battery and receives a load from the non-aqueous electrolyte secondary battery in the arrangement direction,
wherein the non-aqueous electrolyte secondary battery includes an electrode assembly in which a positive electrode, a negative electrode, and a separator disposed between the positive electrode and the negative electrode are stacked, and a housing that accommodates the electrode assembly,
a compressive modulus of elasticity of the elastic body is 5 MPa to 120 MPa, and
the positive electrode includes a positive electrode current collector that contains Ti as a main component and has a thickness of 1 µm to 8 µm, and a positive electrode active material layer that is disposed on the positive electrode current collector and contains a lithium nickel-containing composite oxide in which a proportion of Ni is 70 mol% to 100 mol% with respect to a total amount of metal elements excluding Li.

2. The secondary battery module according to claim 1,
wherein a compressive modulus of elasticity of the separator is smaller than that of a negative electrode active material layer constituting the negative electrode, and
the compressive modulus of elasticity of the elastic body is smaller than that of the separator.

3. A non-aqueous electrolyte secondary battery comprising: an electrode assembly in which a positive electrode, a negative electrode, and a separator disposed between the positive electrode and the negative electrode are stacked; an elastic body that receives a load from the electrode assembly in a stacking direction of the electrode assembly; and a housing that accommodates the electrode assembly and the elastic body,
wherein a compressive modulus of elasticity of the elastic body is 5 MPa to 120 MPa, and
the positive electrode includes a positive electrode current collector that contains Ti as a main component and has a thickness of 1 µm to 8 µm, and a positive electrode active material layer that is disposed on the positive electrode current collector and contains a lithium nickel-containing composite oxide in which a proportion of Ni is 70 mol% to 100 mol% with respect to a total amount of metal elements excluding Li.
